# FASCICULE DE BREVET EUROPEEN

(11) **EP 2 532 533 B1**
(45) Date de publication et mention de la délivrance du brevet: **15.08.2018**
(21) Numéro de dépôt: 12170742.6
(22) Date de dépôt: 04.06.2012
(51) Int. Cl.: C03C 19/00, C03B 23/00

(54) **Dispositif et procédé de marquage interne d'un article en verre creux**
Vorrichtung und Verfahren zur inseitigen Markierung eines Artikels aus Hohlglas
Device and method for marking the inside of a hollow glass item

(30) Priorité: 06.06.2011 FR 1154890
(43) Date de publication de la demande: 12.12.2012
(73) Titulaire: Pochet du Courval, 75010 Paris (FR)
(72) Inventeur: Froissart, Pascal, 80430 NEUVILLE COPPEGUEULE (FR); Baliteau, Sébastien, 80220 BOUTTENCOURT (FR)
(74) Mandataire: Derambure Conseil

(56) Documents cités:
- EP-A2- 1 656 859
- JP-A- 2003 095 671
- US-A1- 2003 026 924

## Description

La présente invention concerne un dispositif et un procédé de marquage interne d'un article en verre creux.

L'invention concerne également des articles en verre creux obtenus avec un tel dispositif de marquage.

Les articles en verre creux, comme par exemple les flacons ou les pots, sont obtenus en déposant au moins une goutte de verre fondu, également appelée paraison, dans une empreinte d'un moule ébaucheur. Une ébauche est préformée dans ce moule ébaucheur au moyen d'un poinçon ou par soufflage d'un gaz dans l'empreinte dudit moule.

Ensuite, l'ébauche ainsi réalisée est démoulée et transférée par exemple par un bras manipulateur, dans un moule finisseur pour former définitivement l'article en verre par soufflage d'un gaz.

Afin de personnaliser ce type d'articles en verre, il est connu de réaliser sur la face externe un ou plusieurs motifs en relief et/ou en creux. Pour cela l'empreinte du moule finisseur comporte un ou plusieurs motifs en relief et/ou en creux qui, lors de l'étape de formation définitive de l'article dans le moule finisseur, viennent s'incruster sur la face externe de cet article en verre du fait de la malléabilité du verre.

Mais, certains utilisateurs d'articles en verre, notamment dans le domaine de la parfumerie ou de la cosmétique, cherchent à personnaliser les articles en verre qu'ils utilisent, en réalisant des décors en relief et/ou en creux à l'intérieur, rappelant ou suggérant la marque et/ou le produit contenu dans les articles. Le ou les décors à l'intérieur peuvent être indépendants de la forme de l'article et ces motifs ou décors peuvent être par exemple des effets optiques particuliers. Le document EP1656859 décrit un dispositif et un procédé de marquage interne d'un article en verre. L'invention a pour but de proposer un dispositif et un procédé de marquage permettant de réaliser ce type d'intervention à l'intérieur d'articles en verre.

L'invention a donc pour objet un dispositif de marquage interne d'un article en verre creux définissant un contenant comprenant une ouverture, un fond opposé à ladite ouverture et au moins une paroi latérale délimitée par une face externe et une face interne, caractérisé en ce que le dispositif comprend un moule (19) pour y placer l'article en verre (1) à l'état malléable et en ce qu'il comprend au moins un poinçon comportant au moins un motif en relief et/ou en creux et un ensemble de support dudit au moins un poinçon déplaçable entre une première position dans laquelle le poinçon est en dehors de l'article et une seconde position dans laquelle le poinçon est dans l'article et comprenant des moyens de déplacement radial, dans la seconde position de l'ensemble de support, dudit au moins un poinçon entre une position passive écartée de la face interne de la paroi latérale et une position active appliquée contre cette face interne pour imprimer ledit au moins un motif en relief et/ou en creux.

Le dispositif selon l'invention peut comprendre une ou plusieurs des caractéristiques suivantes, prises isolément ou suivant toutes les combinaisons techniquement possibles :
- l'ensemble de support comporte, d'une part, une partie fixe d'appui au niveau de l'ouverture de l'article et, d'autre part, une partie mobile déplaçable dans l'axe de l'article et portant lesdits moyens de déplacement radial dudit au moins un poinçon,
- ledit au moins un poinçon est formé par un élément en L comportant une branche verticale portant une plaque amovible munie dudit au moins un motif et une branche horizontale disposée dans une glissière ménagée dans la partie fixe et reliée au moyen de déplacement radial,
- la partie mobile de l'ensemble de support comprend une embase s'étendant parallèlement à la partie fixe et portant au moins une colonne coulissant dans un puits ménagé dans ladite partie fixe,
- les moyens de déplacement radial comprennent une rampe inclinée formée dans ladite au moins une colonne et coopérant avec un pion solidaire de la branche horizontale de l'élément en L du poinçon correspondant, ladite rampe étant inclinée vers le centre du fond de l'article,
- au moins un organe de rappel est interposé entre les parties, respectivement fixe et mobile, pour ramener ledit au moins un poinçon en position passive, et
- la partie mobile de l'ensemble de support est reliée à au moins un organe de commande de déplacement de ladite partie mobile formé par un vérin hydraulique ou pneumatique.

L'invention a également pour objet un procédé de marquage interne d'un article en verre creux au moyen d'un tel dispositif, caractérisé en ce qu'il consiste en les étapes suivantes :
- on place l'article en verre à l'état malléable dans un moule,
- on dispose dans l'axe de l'article l'ensemble de support,
- on déplace dans l'axe de l'article l'ensemble de support pour amener la partie fixe en appui au niveau de l'ouverture de cet article et pour placer ledit au moins un poinçon à l'intérieur dudit article,
- on déplace dans l'axe de l'article la partie mobile de l'ensemble de support pour déplacer radialement ledit au moins un poinçon et l'amener en position active appliquée contre la face interne de la paroi latérale et imprimer sur cette face interne ledit au moins un motif,
- on relâche la partie mobile de l'élément de support pour ramener ledit au moins un poinçon en position passive, et
- on retire l'ensemble de support.

L'invention a aussi pour objet un article en verre creux définissant un contenant comportant une ouverture, un fond opposé à ladite ouverture et au moins une paroi latérale délimitée par une face interne et une face externe, caractérisé en ce que la face interne de ladite au moins une paroi latérale comporte au moins un motif en relief et/ou en creux réalisé au moyen d'un tel dispositif de marquage.

Les caractéristiques et avantages de l'invention apparaîtront au cours de la description qui va suivre, donnée à titre d'exemple et faite en référence aux dessins annexés, sur lesquels :
- la figure 1 est une vue schématique en perspective et en coupe verticale d'un article en verre comportant intérieurement un motif obtenu au moyen d'un dispositif de marquage, conforme à l'invention,
- la figure 2 est une vue schématique en perspective et en coupe verticale de l'article en verre placé dans un moule,
- la figure 3 est une vue schématique en perspective et en coupe verticale de l'article en verre et du moule avec un poinçon du dispositif de marquage, conforme à l'invention,
- la figure 4 est une vue schématique en perspective du dispositif de marquage, conforme à l'invention,
- la figure 5 est une vue schématique en perspective et en coupe verticale du dispositif de marquage représenté à la figure 4, et
- la figure 6 est une vue schématique en perspective et en coupe verticale des moyens de déplacement radial du poinçon du dispositif de marquage, conforme à l'invention.

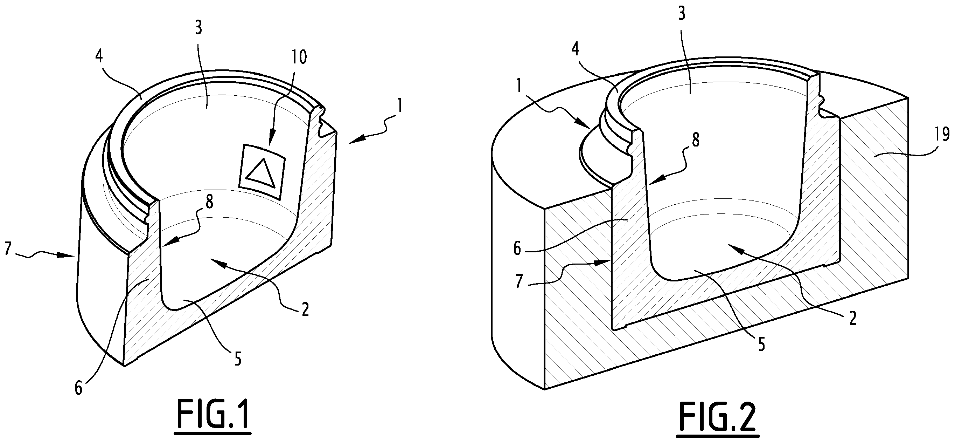

Sur la figure 1, on a représenté schématiquement et en coupe verticale un article en verre creux désigné dans son ensemble par la référence 1.

L'article 1 définit un contenant 2 comprenant une ouverture 3 délimitée par un col 4 et un fond 5 opposé à ladite ouverture 3. Le contenant 2 de l'article 1 comprend également au moins une paroi latérale 6 délimitée par une face externe 7 et une face interne 8.

Dans l'exemple de réalisation représenté sur les figures, l'article en verre 1 présente une forme générale circulaire, cet article en verre 1 peut avoir toute autre forme, comme par exemple une forme générale parallélépipédique.

Ainsi que montrée à la figure 1, la face interne 8 de la paroi latérale 6 comporte au moins un motif 10 en relief et/ou en creux réalisé à l'aide d'un dispositif de marquage, conforme à l'invention.

La face interne 8 de la paroi latérale 6 peut comporter plusieurs motifs 10 en relief et/ou en creux de formes diverses.

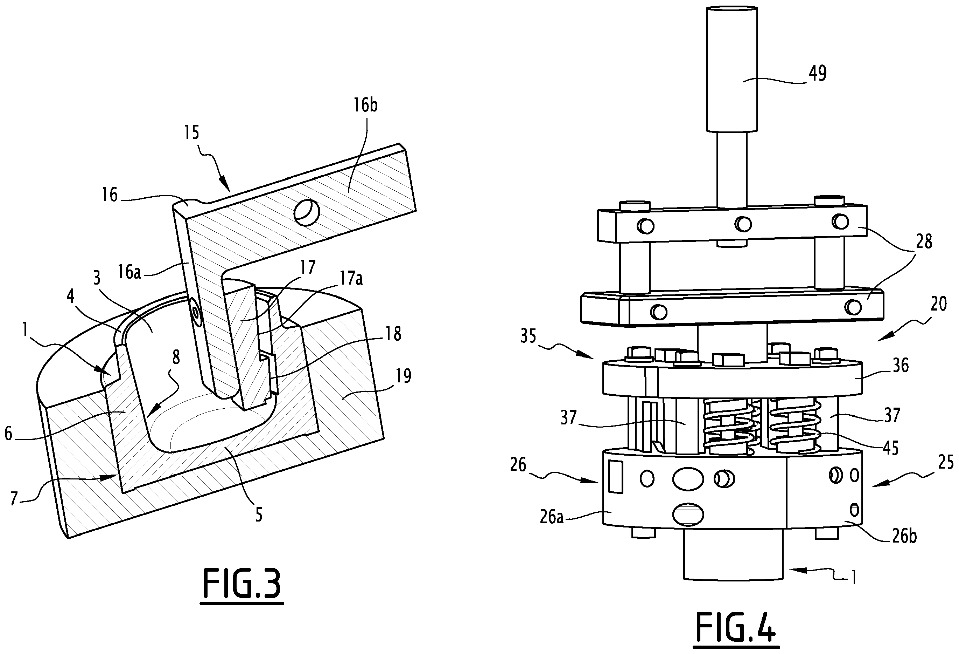

Pour réaliser un tel motif 10 à l'intérieur de l'article en verre 1 sur la face interne 8 de la paroi latérale 6, le dispositif de marquage comporte, entre autres, au moins un poinçon désigné par la référence générale 15 et représenté à la figure 3. Ce poinçon 15 est formé par un élément en L 16 comportant deux branches s'étendant perpendiculairement l'une par rapport à l'autre, une première branche 16a dite branche verticale et une seconde branche 16b dite branche horizontale. La branche verticale 16a de l'élément 16 porte une plaque amovible 17 munie sur sa face externe 17a d'au moins un motif 18 en relief et/ou en creux correspondant au motif 10 à imprimer sur la face interne 8 de la paroi latérale 6 de l'article en verre 1. La plaque 17 est interchangeable afin de monter sur l'élément 16 la plaque correspondant au motif à imprimer.

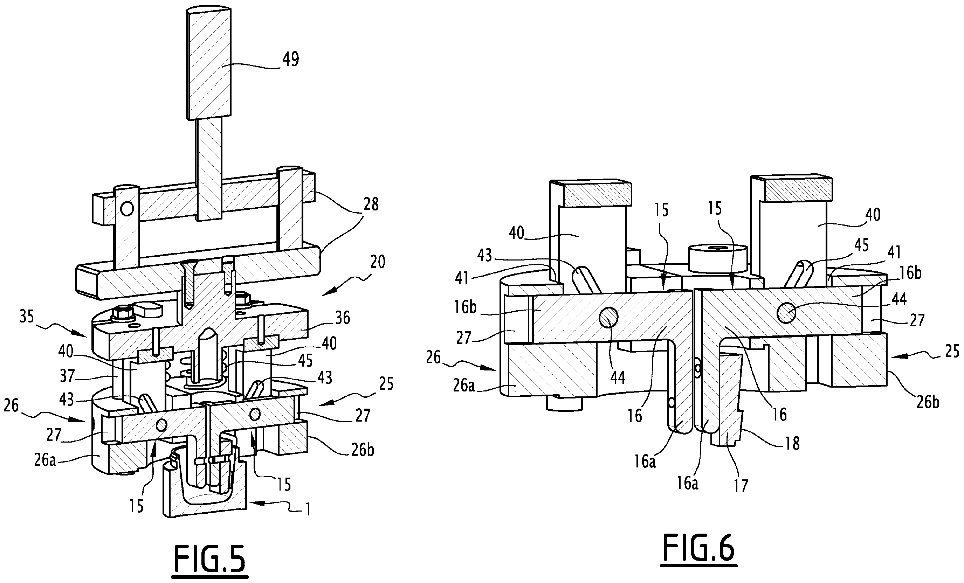

Ainsi que représenté sur les figures 4 et 5, ledit au moins un poinçon 15 est porté par un ensemble de support désigné par la référence 20.

L'ensemble de support 20 comprend, d'une part, une partie fixe 25 d'appui au niveau de l'ouverture 3 de l'article 1 et, d'autre part, une partie mobile 35 déplaçable dans l'axe de l'article 1 et portant des moyens de déplacement radial dudit au moins un poinçon 15.

Dans l'exemple de réalisation représenté sur les figures 4 à 6, le dispositif de marquage est équipé de deux poinçons 15, seul un des poinçons 15 étant muni de la plaque amovible 17 portant ledit au moins un motif 18 en relief et/ou en creux.

Selon une variante, l'autre poinçon 15 peut également être équipé d'une plaque amovible 17 comportant également un motif 18.

La partie fixe 25 de l'ensemble de support 20 est formée par au moins une bague 26 et, de préférence, par deux demi-bagues 26a et 26b juxtaposées et portant chacune un élément en L 16 d'un poinçon 15, ainsi qu'on le verra ultérieurement.

Les demi-bagues 26a et 26b sont reliées entre elles par des moyens appropriés de type connu, non représentés, et sont destinées à venir en appui au niveau du col 4 de l'ouverture 3 de l'article 1 et sur un moule 19 dans lequel l'article en verre à l'état malléable est placé, comme montré à la figure 2.

Comme cela apparaît plus particulièrement sur les figures 5 et 6, la branche horizontale 16b de chaque élément en L 16 est disposée dans une glissière 27 ménagée dans la demi-bague 26a ou 26b correspondante.

La partie mobile 35 de l'élément de support 20 comprend notamment une embase 36 s'étendant parallèlement à la partie fixe 25. Cette partie mobile 35 est déplaçable dans l'axe de l'article en verre 1 et l'embase 36 est guidée au cours de son déplacement par des tiges 37 fixées sur la partie fixe 25 et s'étendant parallèlement à l'axe de l'article en verre 1.

D'une manière générale, l'ensemble de support 20 comporte des moyens de déplacement radial dudit au moins un poinçon 15 entre une position passive écartée de la face interne 8 de la paroi latérale 6 et une position active appliquée contre cette face interne 8 pour imprimer ledit au moins un motif 18 en relief et/ou en creux.

Comme montrés plus particulièrement sur les figures 5 et 6, ces moyens de déplacement radial comprennent, pour chaque poinçon 15, une colonne 40 portée par l'embase 36 et montée coulissante dans un puits 41 ménagé dans la partie fixe 25 et plus particulièrement dans chaque demi-bague 26a et 26b dans chacune desquelles coulisse une colonne 40.

Les moyens de déplacement radial de chaque poinçon 15 comprennent une rampe inclinée 43 formée dans chaque colonne 40 et coopérant avec un pion 44 solidaire de la branche horizontale 16b de l'élément en L 16 du poinçon 15 correspondant.

Comme montrée notamment sur la figure 6, chaque rampe 43 est inclinée vers le centre du fond 5 lorsque l'ensemble de support 20 est placé sur l'article en verre 1, ainsi qu'on le verra ultérieurement.

Au moins un organe de rappel 45 et de préférence plusieurs organes de rappel 45 sont interposés entre les parties, respectivement fixe 25 et mobile 35, pour ramener chaque poinçon 15 en position passive. Ledit au moins un organe de rappel 45 est constitué par un ou plusieurs ressorts de compression, par exemple, ou par un ou plusieurs vérins hydrauliques ou pneumatiques.

La partie mobile 35 de l'ensemble de support 20 est reliée par des organes de liaison 48 à au moins un organe de commande 49 de déplacement de la partie mobile 35, cet organe de commande 49 étant formé par un vérin hydraulique ou pneumatique ou par tout autre organe approprié.

Le marquage de la face interne 8 de la paroi latérale 6 de l'article en verre 1 au moyen du dispositif de marquage 20 est réalisé de la façon suivante.

Tout d'abord, l'article en verre 1 dont le verre est encore à l'état malléable est placé dans le moule 19, comme représenté à la Figure 2, qui peut être constitué par un moule finisseur d'une installation de fabrication des articles en verre 1.

La largeur des poinçons 15 est déterminée pour que ces poinçons 15 pénètrent par l'ouverture 3 à l'intérieur de l'article 1.

Le dispositif de marquage est amené par des moyens appropriés, non représentés, dans l'axe de l'article en verre 1 et ce dispositif est progressivement déplacé dans l'axe de l'article 1 pour amener la partie fixe 25 en appui au niveau du col de l'ouverture 3 et, en appui sur la partie supérieure du moule 19 pour placer les branches verticales 16a dont au moins une porte la plaque amovible 17 à l'intérieur de l'article en verre 1, ainsi que représenté à la Figure 5. Dans cette position, les demi-bagues 26a et 26b de la partie fixe 25 sont en appui sur le moule 19 et, de ce fait, ne peuvent plus se déplacer.

Ensuite, l'organe de commande 49 est actionné ce qui a pour effet de déplacer par l'intermédiaire des organes de liaison 48, l'embase 36 de la partie mobile 35 vers la partie fixe 25 en comprimant les ressorts de compression 45. Au cours de ce déplacement, l'embase 36 est guidée par les tiges 37.

Lors du déplacement de cette embase 36, les colonnes 40 coulissent chacune dans le puits 41 correspondant et se déplacent vers le fond 5 de l'article 1 parallèlement à l'axe de cet article 1.

Lors du déplacement des colonnes 40, la rampe inclinée 43 de chaque colonne 40 coopérant avec un pion 44 déplace l'élément en L 16 de chaque poinçon 15 vers l'extérieur de l'article en verre 1, c'est-à-dire vers la face interne 8 de la paroi latérale 6. Le motif 18 de la plaque amovible 17 du poinçon 15 vient en contact avec la face interne 8 et la pression apposée permet une pénétration du motif 18 dans le verre encore malléable de l'article 1, sans altérer la géométrie générale de cet article 1. La température du verre doit être suffisamment élevée pour permettre une déformation de la face interne 8 de la paroi latérale 6.

Après le marquage, et l'arrêt de l'organe de commande 49, l'embase 36 de la partie mobile 35 reprend sa position initiale par les ressorts de compression 45 et les poinçons 15 reviennent en position passive dans laquelle la place amovible 17 est écartée de la face interne 8 de la paroi latérale 6.

Le dispositif de marquage 20 est enlevé de façon à libérer l'article en verre 1 dont la face interne 8 de la paroi latérale 6 comporte un ou plusieurs motifs 10 en relief et/ou en creux.

Le marquage par le dispositif 20 peut intervenir avant, après ou conjointement à une opération de soufflage destinée à former l'article ou le maintenir en pression interne.

La température des motifs 18 formés sur la plaque amovible 17 du poinçon 15 correspondant peut être régulée afin d'assurer une bonne qualité de rendu et afin d'éliminer les effets de collage ou de déformation. Ces motifs 18 peuvent être réalisés en acier ou en fonte. Ces matériaux peuvent être revêtus d'une couche de métal projetée à chaud pour en améliorer les performances. Le ou les motifs 10 ainsi formés sur la face interne 8 de la paroi latérale 6 de l'article en verre 1 peuvent ensuite être décorés partiellement ou totalement.

## Revendications

1. Dispositif de marquage interne d'un article en verre (1) creux définissant un contenant (2) comprenant une ouverture (3), un fond (5) opposé à ladite ouverture (3) et au moins une paroi latérale (6) délimitée par une face externe (7) et une face interne (8), **caractérisé en ce que** le dispositif comprend un moule (19) pour y placer l'article en verre (1) à l'état malléable et **en ce qu'**il comprend au moins un poinçon (15) comportant au moins un motif (18) en relief et/ou en creux et un ensemble de support (20) dudit au moins un poinçon (15), déplaçable entre une première position dans laquelle le poinçon (15) est en dehors de l'article (1) et une seconde position dans laquelle le poinçon (15) est dans l'article (1), et comprenant des moyens (40, 43, 44) de déplacement radial dans la seconde position de l'ensemble de support (20), dudit au moins un poinçon (15) entre une position passive écartée de la face interne (8) de la paroi latérale (6) et une position active appliquée contre cette face interne (8) pour imprimer ledit au moins un motif (18) en relief et/ou en creux.

2. Dispositif selon la revendication 1, **caractérisé en ce que** l'ensemble de support (20) comporte, d'une part, une partie fixe (25, 26) d'appui au niveau de l'ouverture (3) de l'article (1) et, d'autre part, une partie mobile (35) déplaçable dans l'axe de l'article (1) et portant lesdits moyens (40, 43, 44) de déplacement radial dudit au moins un poinçon (15).

3. Dispositif selon la revendication 2, **caractérisé en ce que** la partie fixe (25) est une partie fixe d'appui sur la partie supérieure du moule (19), au niveau du col de l'ouverture (3).

4. Dispositif selon l'une quelconque des revendications précédentes, **caractérisé en ce que** ledit au moins un poinçon (15) est formé par un élément en L (16) comportant une branche verticale (16a) portant une plaque amovible (17) munie dudit au moins un motif (18) et une branche horizontale (16b) disposée dans une glissière (27) ménagée dans la partie fixe (25) et reliée au moyen (40, 43, 44) de déplacement radial.

5. Dispositif selon la revendication 2, 3, ou 4 **caractérisé en ce que** la partie mobile (35) de l'ensemble de support (20) comprend une embase (36) s'étendant parallèlement à la partie fixe (25) et portant au moins une colonne (40) coulissant dans un puits (41) ménagé dans ladite partie fixe (25).

6. Dispositif selon l'une quelconque des revendications précédentes, **caractérisé en ce que** les moyens de déplacement radial comprennent une rampe inclinée (43) formée dans ladite au moins une colonne (40) et coopérant avec un pion (44) solidaire de la branche horizontale (16b) de l'élément en L (16) du poinçon (15) correspondant, ladite rampe (43) étant inclinée vers le centre du fond (5) de l'article (1).

7. Dispositif selon l'une quelconque des revendications 2 à 6, **caractérisé en ce qu'**au moins un organe de rappel (45) est interposé entre les deux parties, respectivement fixe (25) et mobile (35), pour ramener ledit au moins un poinçon (15) en position passive.

8. Dispositif selon l'une quelconque des revendications précédentes, **caractérisé en ce que** la partie mobile (35) est reliée à au moins un organe de commande (49) du déplacement de ladite partie mobile (35) formé par un vérin hydraulique ou pneumatique.

9. Dispositif selon l'une quelconque des revendications précédentes, **caractérisé en ce que** le poinçon (15) est déplaçable suivant l'axe de l'article en verre (1) par l'ouverture (3) opposée au fond (5).

10. Procédé de marquage interne d'un article en verre (1) creux au moyen d'un dispositif selon l'une quelconque des revendications précédentes, **caractérisé en ce qu'**il consiste en les étapes suivantes :
- on place l'article en verre (1) à l'état malléable dans un moule (19),
- on dispose dans l'axe de l'article (1) l'ensemble de support (20),
- on déplace dans l'axe de l'article (1) l'ensemble de support (20) pour amener la partie fixe (25) en appui au niveau de l'ouverture (3) de cet article (1) et pour placer ledit au moins un poinçon (15) à l'intérieur dudit article (1),
- on déplace dans l'axe de l'article (1), la partie mobile (35) de l'ensemble de support (20) pour déplacer radialement ledit au moins un poinçon (15) et l'amener en position active appliquée contre la face interne (8) de la paroi latérale (6) et imprimer sur cette face interne ledit au moins un motif (18),
- on relâche la partie mobile (35) de l'élément de support (20) pour ramener ledit au moins un poinçon (15) en position passive, et
- on retire l'ensemble de support (20).

## Patentansprüche

1. Vorrichtung zur Innenmarkierung eines hohlen Glasartikels (1) welcher einen Behälter (2) definiert, der eine Öffnung (3), einen Boden (5) gegenüber der Öffnung (3) und wenigstens eine Seitenwand (6) aufweist, die durch eine Außenseite (7) und eine Innenseite (8) begrenzt ist, **dadurch gekennzeichnet, dass** die Vorrichtung eine Form (19) umfasst, um dort einen Glasartikel in formbarem Zustand zu platzieren, und dadurch, dass sie wenigstens einen Stempel (15) aufweist, der wenigstens ein Relief- und/oder Hohlmuster (18) aufweist und eine Halteanordnung (20) des wenigstens einen Stempels (15), die zwischen einer ersten Stellung, in der sich der Stempel (15) außerhalb des Artikels (1) befindet und einer zweiten Stellung, in der sich der Stempel (15) in dem Artikel (1) befindet, verlagerbar ist,
und welche Mittel (40, 43, 44) zur radialen Verlagerung in der zweiten Stellung der Halteanordnung (20) des wenigstens einen Stempels (15) umfasst, zwischen einer passiven, von der Innenseite (8) der Seitenwand (6) entfernten Stellung und einer aktiven, gegen diese Innenwand (8) gewandten Stellung, um das Relief- und/oder Hohlmuster (18) zu drucken.

2. Vorrichtung nach Anspruch 1, **dadurch gekennzeichnet, dass** die Halteanordnung (20) einerseits einen festen Anlageteil (25, 26) auf Höhe der Öffnung (3) des Artikels (1) umfasst und andererseits einen beweglichen Teil (35), der in der Achse des Artikels (1) verlagerbar ist und die radialen Verlagerungsmittel (40, 43, 44) des wenigstens einen Stempels (15) trägt.

3. Vorrichtung nach Anspruch 2, **dadurch gekennzeichnet, dass** der feste Teil (25, 26) ein fester Anlageteil auf dem oberen Teil der Form (19) auf Höhe des Halses der Öffnung (3) ist.

4. Vorrichtung nach einem der vorhergehenden Ansprüche, **dadurch gekennzeichnet, dass** der wenigstens eine Stempel (15) durch ein L-Element (16) gebildet ist, welches einen vertikalen Schenkel (16a) umfasst, der eine entfernbare Platte (17) trägt, die mit dem wenigstens einen Muster (18) versehen ist, und einen horizontalen Schenkel (16b) umfasst, der in einer Gleitschiene (27) platziert ist, die in dem festen Teil (25) angeordnet und mit dem radialen Verlagerungsmittel (40, 43, 44) verbunden ist.

5. Vorrichtung nach Anspruch 2, 3 oder 4, **dadurch gekennzeichnet, dass** der bewegliche Teil (35) der Halteanordnung (20) eine Grundplatte (36) umfasst, die sich parallel zum festen Teil (25) erstreckt und wenigstens eine Säule (40) trägt, die in einem in dem festen Teil (25) angeordneten Schacht (41) gleitet.

6. Vorrichtung nach einem der vorhergehenden Ansprüche, **dadurch gekennzeichnet, dass** die radialen Verlagerungsmittel eine schräge Rampe (43) umfassen, die in der wenigstens einen Säule (40) gebildet ist und mit einem Zapfen (44) zusammenwirkt, der fest mit dem horizontalen Schenkel (16b) des L-Elements (16) des zugehörigen Stempels (15) verbunden ist, wobei die schräge Rampe (43) zur Mitte des Bodens (5) des Artikels (1) hin geneigt ist.

7. Vorrichtung nach einem der Ansprüche 2 bis 6, **dadurch gekennzeichnet, dass** wenigstens ein Rückzugselement (45) zwischen den beiden Teilen angeordnet ist, jeweils fest (25) oder beweglich (35), um den wenigstens einen Stempel (15) in die passive Stellung zurückzuführen.

8. Vorrichtung nach einem der vorhergehenden Ansprüche, **dadurch gekennzeichnet, dass** der bewegliche Teil (35) mit wenigstens einem Steuerungselement (49) für die Verlagerung des beweglichen Teils (35) verbunden ist, das durch einen Hydraulik- oder Pneumatikzylinder gebildet ist.

9. Vorrichtung nach einem der vorhergehenden Ansprüche, **dadurch gekennzeichnet, dass** der Stempel (15) entlang der Achse des Glasartikels (1) durch die Öffnung (3) gegenüber dem Boden (5) verlagerbar ist.

10. Verfahren zur Innenmarkierung eines hohlen Glasartikels (1) mittels einer Vorrichtung nach einem der vorhergehenden Ansprüche, **dadurch gekennzeichnet, dass** es die folgenden Schritte umfasst:
- Platzieren des Glasartikels (1) in einer Form (19) im verformbaren Zustand,
- Anordnen der Halteanordnung (20) in der Achse des Artikels (1),
- Verlagern der Halteanordnung (20) in der Achse des Artikels (1), um den festen Teil (25) auf Höhe der Öffnung (3) dieses Artikels (1) in Anlage zu bringen und um den wenigstens einen Stempel (15) im Inneren des Artikels (1) zu platzieren,
- Verlagern des beweglichen Teils (35) der Halteanordnung (20) in der Achse des Artikels (1) um den wenigstens einen Stempels (15) radial zu verlagern und ihn in die aktive, gegen die Innenseite (8) der Seitenwand (6) gewandte Stellung zu bringen und das wenigstens eine Muster (18) auf diese Innenseite zu drucken,
- Lösen des beweglichen Teils (35) der Halteanordnung (20), um den wenigstens einen Stempel (15) in die passive Stellung zu bringen, und
- Zurückziehen der Halteanordnung (20).

## Claims

1. Device for marking the inside of a hollow glass item (1) defining a container (2) having an opening (3), a bottom (5) opposite said opening (3), and at least one side wall (6) delimited by an outer surface (7) and an inner surface (8), **characterized in that** the device comprises a mold (19) for placing therein the glass item in a malleable state,
and **in that** it comprises at least one plunger (15) comprising at least one raised or hollow pattern (18) and a support assembly (20) for said at least one plunger (15),
movable between a first position in which the plunger (15) is outside the item (1), and a second position in which the plunger (15) is inside the item (1); and comprising radial movement means (40,43,44) of the support assembly (20) in the second position, moving said at least one plunger between a passive position spaced away from the inner surface (8) of the side wall (6) and an active position pressed against said inner surface (8) to imprint said at least one raised or hollow pattern (18).

2. The device according to claim 1, **characterized in that** the support assembly (20) comprises on the one hand a stationary bearing portion (25,26) at the opening (3) of the item (1) on the one hand, and on another hand a moving portion (35) that can be moved in an axis of the item (1) and supporting said radial movement means (40,43,44) of said at least one plunger (15).

3. The device according to claim 2, **characterized in that** the stationary bearing portion (25,26) bears on the upper part of the mold (19), at the neck of the opening (3).

4. The device according to any of the preceding claims, **characterized in that** the at least one plunger (15) comprises an L-shaped element (16), comprising a vertical branch (16a) supporting a removable plate (17) provided with said at least one pattern (18) and
a horizontal branch (16b) positioned in a guideway (27) formed in the stationary portion (25) and connected to the radial movement means (40,43,44).

5. The device according to any of the claims 2, 3, or 4, **characterized in that** the moving portion (35) of the support assembly (20) comprises a base (36) extending parallel to the stationary portion (25) and supporting at least one column (40) sliding in a well (41) formed in said stationary portion (25).

6. The device according to any of the preceding claims, **characterized in that** radial movement means (40,43,44) comprises an inclined ramp (43) formed in said at least one column (40) and cooperating with a pin (44) secured to the horizontal branch (16b) of the L-shaped element (16) of the corresponding plunger (15), wherein said ramp (43) being inclined toward the center of the bottom (5) of the item (1).

7. The device according to any of the claims 2 to 6, **characterized in that** at least one return member (45) is inserted between the stationary and moving portions (25,35), respectively, to return said at least one plunger (15) to the passive position.

8. The device according to any of the preceding claims, **characterized in that** the moving portion (35) is connected to at least one control member (49) controlling the movement of said moving portion (35) formed by a hydraulic or pneumatic cylinder.

9. The device according to any of the preceding claims, **characterized in that** the plunger (15) is movable along the axis of the glass item (1), through the opening (3) opposed to the bottom (5).

10. Method for marking the inside of a hollow glass item (1) using a device according to any of the preceding claims, comprising the following steps:
- placing the glass item (1) in a malleable state in a mold(19),
- placing the support assembly (1) in the axis of the item (20),
- moving the support assembly (20) in the axis of the item (1) to make the stationary portion (25) bear at the opening (3) of said item (1) and to place said at least one plunger (15) inside said item (1),
- moving the moving portion (35) of the support assembly (20) in the axis of the item (1) to radially move said at least one plunger (15) and to bring it into the active position pressed against the inner surface (8) of the side wall (6) and imprint said at least one pattern (18) on that inner surface,
- releasing the moving portion (35) of the support element (20) to return said at least one plunger (15) to the passive position, and
- removing the support assembly (20).
